# EUROPÄISCHE PATENTSCHRIFT

(11) **EP 0 752 328 B1**
(45) Veröffentlichungstag und Bekanntmachung des Hinweises auf die Patenterteilung: **25.08.1999**
(21) Anmeldenummer: 96107177.6
(22) Anmeldetag: 07.05.1996
(51) Int. Cl.: B60D 1/02

(54) **Anhängerkupplung**
Trailer coupling
Attelage de remorque

(30) Priorität: 06.07.1995 DE 29510927 U
(43) Veröffentlichungstag der Anmeldung: 08.01.1997
(73) Patentinhaber: Sauermann, Hans, D-86558 Freinhausen (DE)
(72) Erfinder: Sauermann, Hans, D-86558 Freinhausen (DE)
(74) Vertreter: Sasse, Volker, Dipl.-Ing.

(56) Entgegenhaltungen:
- EP-A- 0 315 731
- DE-A- 3 016 247
- FR-A- 908 390

## Beschreibung

Die Erfindung betrifft eine Anhängerkupplung gemäß dem Oberbegriff des Patentanspruchs 1.

Eine Anhängerkupplung ist aus der DE-A 42 22 343 bekannt. Sie besitzt einen Kuppelzapfen, der mit einem schwenkbaren Arm verschiebbar gehalten ist. Der Arm weist eine unterseitige Rastvertiefung auf, in die eine Rastnase eines weiteren mittels eines Handhebels schwenkbaren Armes eingreifen kann, um den Kuppelzapfen in seiner Lösestellung zu verriegeln. Eine Tastzunge, die beim Eindringen einer Kuppelöse in das Kupplungsmaul verschwenkt wird, ragt in das Kupplungsmaul dieser Anhängerkupplung. Beim Verschwenken der Tastzunge wirkt ein Entsperrvorsprung der Tastzunge mit einer Entsperrklinke des Armes zusammen und entriegelt dadurch den Kuppelzapfen. Eine in das Kupplungsmaul eindringende Kuppelöse bewirkt daher ein selbsttätiges Verschieben des Kuppelzapfens in die Kuppelstellung. Steht der Anhänger beim Auskuppeln auf einem abfallenden Untergrund, so drückt dessen Kuppelöse gegen das Kupplungsmaul. Die in das Kupplungsmaul ragende Tastzunge wird dabei bis zu ihrem Anschlag verschwenkt. Dies führt bei dieser bekannten, selbsttätig verriegelbaren Anhängerkupplung jedoch dazu, daß der Kuppelzapfen in seiner Lösestellung nicht offen gehalten werden kann. Der Handhebel zum Lösen der Kupplung muß daher in seiner Lage festgehalten werden, während gleichzeitig die Kuppelöse aus dem Kupplungsmaul zu entfernen ist. Da unter den vorbeschriebenen Gegebenheiten zum Entfernen der Kuppelöse aus dem Kupplungsmaul ein erhöhter Kraftaufwand erforderlich ist, müssen hierzu beide Hände der bedienenden Person die Deichsel des Anhängers erfassen. Da gleichzeitig der Handhebel festgehalten werden muß, ist mindestens eine weitere Bedienungsperson nötig.

Aus der EP-A 0 315 731 ist eine weitere Anhängerkupplung bekannt. Diese Anhängerkupplung besitzt einen ähnlichen Aufbau wie die vorgenannte Anhängerkupplung, wobei die Tastzunge zusätzlich mit einer Sperrklinke ausgerüstet ist. Diese Sperrklinke wirkt mit einer Sperrungs-Unterdrückungsscheibe zusammen, die um eine Achse drehbar gehalten ist. Je nach Drehlage der Sperrungs-Unterdrückungsscheibe gelangt die Sperrklinke in oder außer Eingriff mit der Entriegelungsvorrichtung. Die Drehbewegung der Sperrungs-Unterdrückungsscheibe ist derart abgestimmt, daß die Sperrklinke in der unbelasteten Ruhestellung der Tastzunge bewegbar und im übrigen unbewegbar ist. Durch diesen Mechanismus wird erreicht, daß die Tastzunge eine Entriegelung des Kuppelzapfens nur dann bewirkt, wenn zuvor die Deichsel ausreichend weit zurückgezogen wurde. Dieser Mechanismus hat jedoch den Nachteil, daß die Bewegungsabläufe der Sperrungs-Unterdrückungsscheibe sehr genau abgestimmt werden müssen, so daß der gesamte Aufbau der Kupplung relativ kompliziert und störanfällig ist.

Der Erfindung liegt die Aufgabe zugrunde, eine Anhängerkupplung derart auszubilden, daß sie einfach aufgebaut ist und beim Eindringen einer Kuppelöse in das Kupplungsmaul selbsttätig schließt, daß aber bei einem geöffneten Kuppelzapfen bei im Kupplungsmaul verbleibender Kuppelöse dessen Lösestellung verriegelt bleibt.

Die gestellte Aufgabe wird erfindungsgemäß mit den Merkmalen des Patentanspruchs 1 gelöst.

Die Rastnase der Tastzunge ist als selbständiger, bewegbarer und arretierbarer Teil ausgebildet. Dieser Teil ist verschiebbar oder verschwenkbar an der Tastzunge gehalten. Die Rastnase kann beispielsweise als in einer Führung gleitender Bolzen oder als ein angelenkter Hebelarm ausgebildet sein. Die Rastnase ist nur in einem bestimmten Schwenkbereich der Tastzunge arretiert. In diesem Schwenkbereich der Tastzunge kann die Rastnase bei in der Lösestellung verriegeltem Kuppelzapfen den Mitnehmerteil der Ver- und Entriegelungseinheit erfassen und den Kuppelzapfen entriegeln. Jener Schwenkbereich der Tastzunge, in der die Rastnase arretiert ist, umfaßt alle Schwenkwinkel von der unbelasteten Lage der Tastzunge bis zu einem vorgegebenen Grenzwinkel. Bei Verschwenkung der Tastzunge über diesen vorgegebenen Grenzwinkel hinaus ist die Rastnase relativ zur Tastzunge bewegbar. Der Grenzwinkel wird dabei so gewählt, daß die Rastnase beim Eindringen einer Kuppelöse in das Kupplungsmaul so lange arretiert bleibt, bis der Kuppelzapfen entriegelt wird. Bei tieferem Eindringen der Kuppelöse in das Kupplungsmaul wird die Arretierung der Rastnase aufgehoben. Vorzugsweise liegt der Grenzwinkel zur Arretierung der Rastnase in einem Bereich, der einer Verschwenkung der Tastzunge durch eine Kuppelöse entspricht, die mit dem Kuppelzapfen annähernd fluchtet und ein Durchdringen der Kuppelöse durch den Kuppelzapfen gestattet. Dieser Bereich ist durch die üblicherweise am unteren Ende des Kuppelzapfens vorgesehene Phase und die Differenz zwischen den Durchmessern des Kuppelzapfens und der Kuppelöse definiert. Die von der Winkellage der Tastzunge abhängige Arretierung der Rastnase ist durch einen in die Rastnase eindringenden Vorsprung realisiert, der mit dem Kupplungsmaul fest verbunden ist. Ebenso wäre es vorstellbar, daß die Rastnase einen Vorsprung aufweist, der in eine Aussparung des Kupplungsmauls greift. Die Rastnase könnte auch durch einen im Kupplungsmaul vorgesehenen, als Abweiser ausgebildeten Vorsprung arretiert werden.

Die Ausbildung der Rastnase gemäß Anspruch 2 ist besonders vorteilhaft, da ein Bolzen trotz geringer Abmessungen sehr leicht das zur Entriegelung des Kuppelzapfens erforderliche Drehmoment auf den Arm der Ver- und Entriegelungseinheit ausüben kann. Die Rastnase läßt sich daher besonders klein ausbilden, so daß bestehende Anhängerkupplungen leicht auf die neuerungsgemäße Anhängerkupplung umgerüstet werden können.

Durch die Nutzung der Merkmale des Anspruchs 3 ist der Übergang der Rastnase von der arretierten Lage in die freie Lage, in der sie kein Drehmoment auf die Ver- und Entriegelungseinheit ausübt, bei minimalem Verstellweg möglich. Dieser erforderliche Stellweg ist minimal, wenn die Bewegungsrichtung der Rastnase wenigstens annähernd im rechten Winkel von der Schwenkachse der Tastzunge weggerichtet ist. Diese Richtung der Bewegung verläuft in etwa der Längserstreckung der Tastzunge.

Insbesondere unter beengten Platzverhältnissen im Kupplungsmechanismus ist es gemäß Anspruch 4 vorteilhaft, die Rastnase in die Tastzunge zu integrieren. Die Rastnase benötigt daher keinen zusätzlichen Platz, so daß bestehende Anhängerkupplungen besonders einfach auf die neuerungsgemäße Anhängerkupplung umgerüstet werden können. Eine Bohrung in Längsrichtung in die Tastzunge bedeutet keine Schwierigkeit, weil genug Material vorhanden ist, und die Bohrung erlaubt eine sehr präzise Führung der Rastnase, so daß weitere Maßnahmen zur Führung der Rastnase entfallen können.

Die Merkmale des Anspruchs 5 ergeben eine besonders einfache und damit kostengünstige Realisierung einer von der Winkellage der Tastzunge abhängige Arretierung der Rastnase. Durch den Vorsprung wird die Rastnase in Lage gehalten, so lange sich die Tastzunge in einem Schwenkbereich zwischen ihrer unbelasteten Lage und einem vorgegebenen Grenzwinkel befindet. Dieser Grenzwinkel ist durch das Verhältnis zwischen der Eindringtiefe des Vorsprungs in die Aussparung der Rastnase in der unbelasteten Lage der Tastzunge und dem Abstand des Vorsprungs von der Schwenkachse der Tastzunge definiert.

Ist der Vorsprung gemäß Anspruch 6 ein Stift, so wird dessen Länge durch Berechnung oder experimentell bestimmt. Die alternative Anwendung einer Madenschraube als Vorsprung hat den besonderen Vorteil, daß der Grenzwinkel, an dem die Arretierung der Rastnase aufgehoben wird, durch einfaches Drehen der Madenschraube einstellbar ist. Die Höhe des Vorsprungs kann daher sehr einfach an Fertigungstoleranzen und an Änderungen im Aufbau des Kupplungsmechanismus angepaßt werden.

Die Ausbildung der Rastnase gemäß Anspruch 7 hat den besonderen Vorteil, daß bei aufgehobener Arretierung der Rastnase diese sehr leicht über den Mitnehmerteil der Ver- und Entriegelungseinheit gleiten kann, ohne ein nennenswertes Drehmoment auszuüben. Der Kuppelzapfen bleibt daher nach seiner Verschiebung in die Lösestellung sicher verriegelt, auch wenn sich die Tastzunge in verschwenkter Lage befindet.

Eine paßgerechte Ausbildung der Rastnase zum Mitnehmerteil gemäß Anspruch 8 ergibt eine linienhafte bis flächige Berührung beider Teile. Dies erlaubt eine sehr sichere Übertragung des Drehmoments von der Tastzunge zur Ver- und Entriegelungseinheit bei arretierter Rastnase.

Schließlich ist die Anwendung der Merkmale des Anspruchs 9 vorteilhaft. Eine radiale Nut führt die Rastnase bei Verschwenkung des Armes der Ver- und Entriegelungseinheit. Eine sich am Ende der Nut ergebende Stirnwandung ergibt in einfachster Weise den Mitnehmerteil. Die Rastnase gleitet daher bei Verschwenkung des Schwenkarmes der Ver- und Entriegelungseinheit entlang der Nut, bis sie die Stirnwandung berührt. Durch Verschwenken der Tastzunge drückt die Rastnase gegen die Stirnwand, so daß beide kraftschlüssig verbunden sind. Bei Aufhebung der Arretierung der Rastnase springt diese bei weiterer Verschwenkung der Tastzunge aus der Nut heraus, so daß sie auf die Ver- und Entriegelungseinheit kein Drehmoment mehr übertragen kann.

Anhand der Zeichnung wird eine bevorzugte Ausführungsform sowie die Arbeitsweise des Erfindungsgegenstandes beispielhaft erläutert.

Es zeigt:
- Figur 1: einen Längsschnitt durch eine Anhängerkupplung in der Lösestellung des Kuppelzapfens,
- Figur 2: die Anhängerkupplung von Figur 1 beim Einfahren einer Kuppelöse,
- Figur 3: die Anhängerkupplung von Figur 1 in der Kuppelstellung des Kuppelzapfens und
- Figur 4: die Anhängerkupplung von Figur 1 in der Lösestellung des Kuppelzapfens mit in das Kupplungsmaul drückender Kuppelöse.

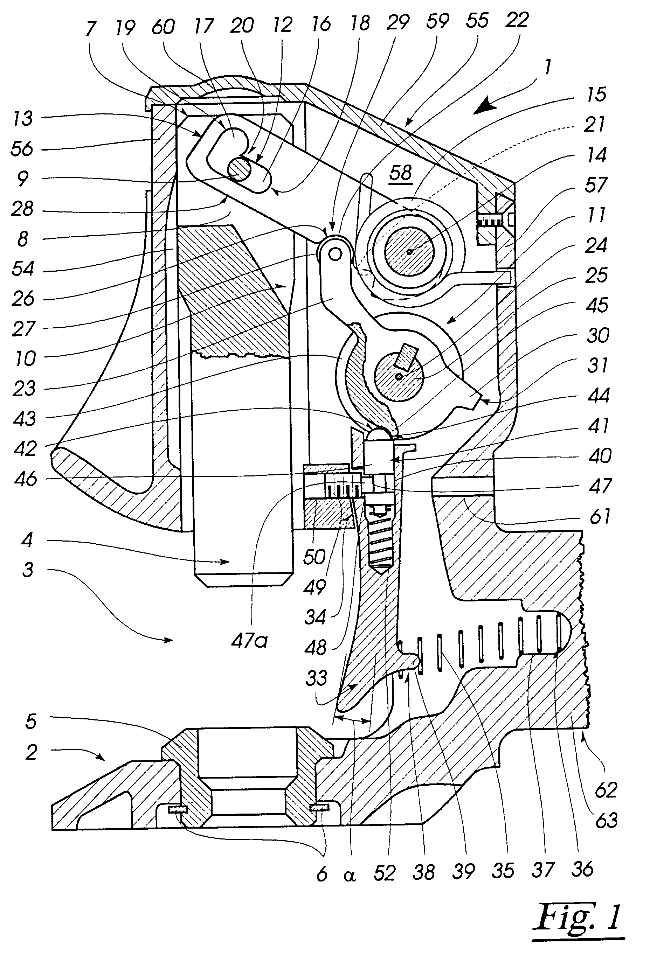

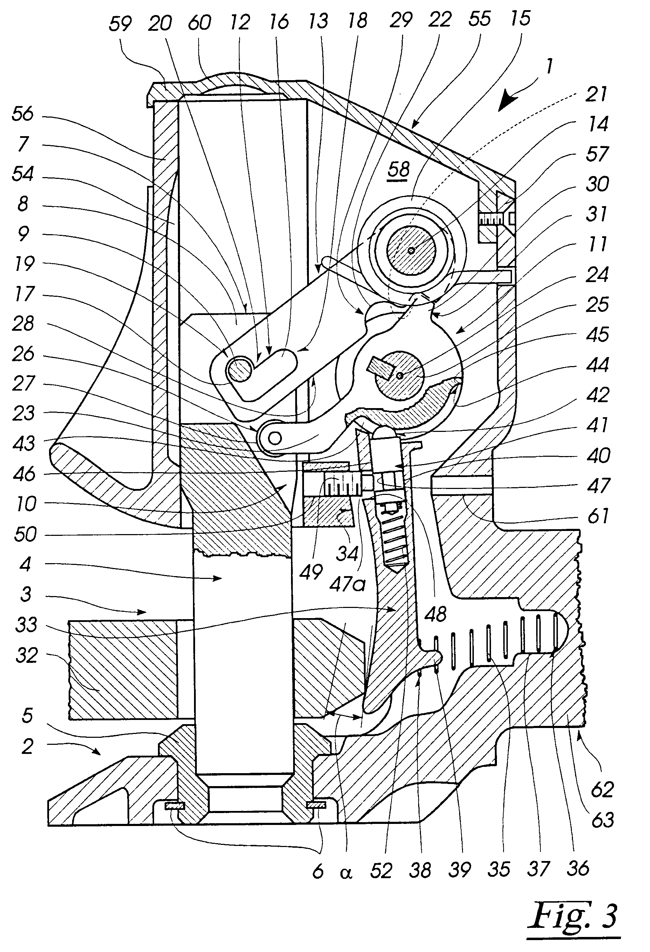

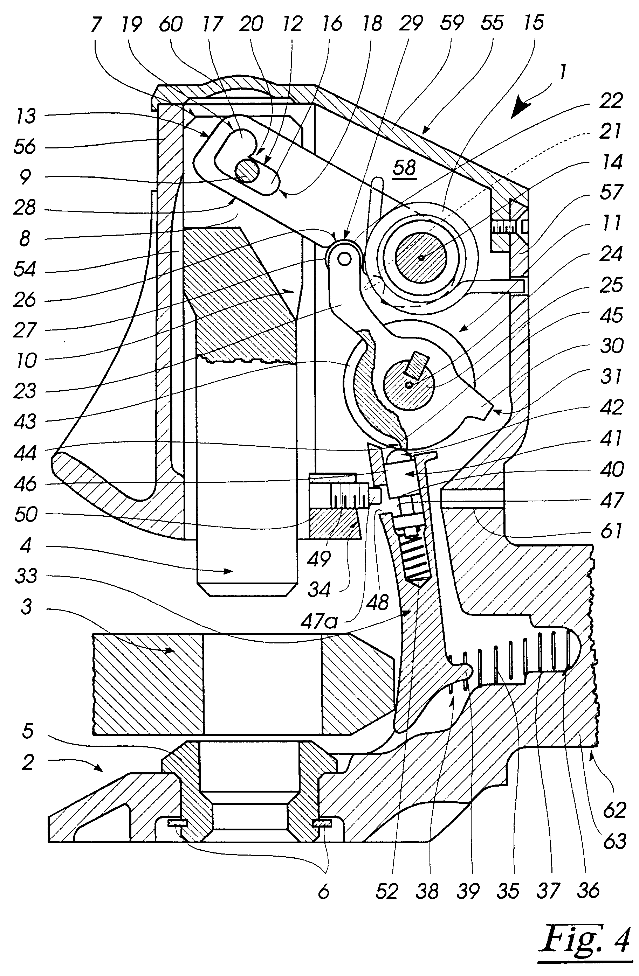

Eine Anhängerkupplung 1 gemäß den Figuren 1 bis 4 weist einen Kupplungskopf 2 mit einem Kupplungsmaul 3 und einem Gehäuse 55 auf. Ein Kuppelzapfen 4 ist zwischen einer in den Figuren 1 und 4 dargestellten Lösestellung und einer aus Figur 3 entnehmbaren Kuppelstellung linear verschiebbar geführt. In der Lösestellung durchsetzt der Kuppelzapfen 4 das Kupplungsmaul 3. Im Kupplungskopf 2 ist an der dem Kuppelzapfen 4 gegenüberliegenden Seite ein Ringteil 5 vorgesehen, welcher mit dem Kuppelzapfen 4 in der Kuppelstellung zusammenwirkt. Der Kuppelzapfen 4 ist daher in der Kuppelstellung beidseitig in seiner Lage festgelegt, so daß Zug- oder Schubkräfte durch den Anhänger vom Kuppelzapfen 4 einfach aufgenommen werden können. Da der Ringteil 5 hohen Belastungen ausgesetzt ist, ist er vorzugsweise austauschbar im Kupplungskopf 2 festgelegt. Ein Sicherungsring 6 sorgt für einen sicheren Halt des Ringteils 5 im Kupplungskopf 2. Bei einer Beschädigung des Ringteils 5 kann dieses sehr einfach ausgetauscht werden, ohne die Anhängerkupplung 1 demontieren oder gar vollständig austauschen zu müssen.

Im oberen Teil ist der Kuppelzapfen 4 geschnitten dargestellt. Er besitzt an seinem oberen Ende 7 eine Längsnut 8, die von einem Querbolzen 9 durchsetzt wird. Die Längsnut 8 ist am hinteren Ende 10 des Kuppelzapfens 4 nach unten gezogen, um den Eingriff einer Verstelleinheit 11 zu ermöglichen.

Der Querbolzen 9 wird von einer Kulisse 12 eines Armes 13 erfaßt. Der Arm 13 ist um eine Achse 14 schwenkbar gehalten und wird von einer Feder 15 mit einem entgegen dem Uhrzeigersinn wirkenden Drehmoment beaufschlagt. Die Feder 15 drückt daher den Arm 13 in die in Figur 3 dargestellte Kuppelstellung. Die Kulisse 12 des Armes 13 wird von einem Längsschenkel 16 und einem im wesentlichen senkrecht dazu verlaufenden Querschenkel 17 gebildet. Der Längsschenkel 16 verläuft im wesentlichen in Richtung der Längserstreckung des Armes 13. Er ist etwas unterhalb der Mitte des Armes 13 vorgesehen. Die freien Enden 18, 19 des Längsschenkels 16 und des Querschenkels 17 sind gerundet ausgebildet, so daß sie an die Form des Querbolzens 9 angepaßt sind. Am innenseitigen Übergang 20 zwischen dem Längsschenkel und dem Querschenkel 17 bildet der Arm 13 einen spitzen Winkel. In der in Figur 3 dargestellten Kuppelstellung der Anhängerkupplung 1 befindet sich der Querbolzen 9 im Querschenkel 17 der Kulisse 12. Durch die spezielle Ausbildung des innenseitigen Übergangs 20 zwischen dem Längsschenkel 16 und dem Querschenkel 17 der Kulisse 12 ergibt sich eine zuverlässige Verriegelung des Kuppelzapfens 4 in der Kuppelstellung. Versucht der Kuppelzapfen 4 sich nach oben zu verschieben, so stößt der Querbolzen 9 gegen das Ende 19 des Querschenkels 17 der Kulisse 12. Der Kuppelzapfen 4 versucht daher, den Arm 13 im Uhrzeigersinn zu verschwenken. Dabei stößt jedoch der Übergang 20 zwischen dem Längsschenkel 16 und dem Querschenkel 17 der Kulisse 12 gegen den Querbolzen 9. Dies verhindert eine Schwenkbewegung des Armes 13 und damit ein Verschieben des Kuppelzapfens 4 von der Kuppelstellung in die Lösestellung.

Am Arm 13 sind unterseitig nahe der Achse 14 zwei Rastvertiefungen 21, 22 vorgesehen, in die die Verstelleinheit 11 eingreift. Die Verstelleinheit 11 besitzt einen Schwenkarm 23, der um eine Achse 24 schwenkbar gehalten ist. Der Schwenkarm 23 ist mit einer Welle 25 drehfest verbunden, die mit einem nicht dargestellten Handhebel oder einem Stellglied um die Achse 24 verschwenkt werden kann. Als Stellglied kommt beispielsweise ein Hydraulikzylinder oder ein Hydraulik- oder Elektromotor in Betracht. Alternativ könnte die Welle 25 mit einem Bowdenzug verbunden sein. Am freien Ende 26 des Schwenkarmes 23 ist eine Rolle 27 drehbar gelagert. Beim Verschwenken der Welle 25 aus der in Figur 3 dargestellten Kuppelstellung im Uhrzeigersinn drückt die Rolle 27 gegen die Unterkante 28 des Armes 13. Hierdurch wird der Arm 13 im Uhrzeigersinn verschwenkt, wodurch der Querfortsatz 9 des Kuppelzapfens 4 entlang des Querschenkels 17 zum Längsschenkel 16 hin verschoben wird. Durch weiteres Schwenken des Schwenkarmes 23 im Uhrzeigersinn wird der Querbolzen 9 vom Längsschenkel 16 erfaßt und angehoben. Der Kuppelzapfen 4 bewegt sich daher nach oben, wobei sich der Querfortsatz 9 in Abhängigkeit des Schwenkwinkels des Armes 13 entlang des Längsschenkels 16 der Kulisse 12 in Richtung zur Achse 14 des Armes 13 verschiebt. Sobald die Rolle 27 des Schwenkarmes 23 in die Rastvertiefung 22 des Armes 13 eintaucht, bewegt sich der Arm 13 um einen kleinen Winkel entgegen dem Uhrzeigersinn. Man erreicht hierdurch die in Figur 1 dargestellte Lösestellung. Das Zusammenwirken der Rolle 27 mit der Rastvertiefung 22 sorgt für eine Arretierung des Armes 13 und dadurch des Kuppelzapfens 4 in der Lösestellung. Der Handhebel an der Welle 25 kann daher losgelassen werden, ohne daß sich der Kuppelbolzen 4 senkt. Die Rastvertiefung 22 bildet daher zusammen mit der Rolle 27 eine Ver- und Entriegelungseinheit 29 für den Kuppelbolzen 4.

Eine Sperrklinke 30 liegt dem Schwenkarm 23 der Verstelleinheit 11 in etwa diametral gegenüber. In der in Figur 3 dargestellten Kuppelstellung greift die Sperrklinke 30 in die Rastvertiefung 21 ein. In dieser Lage verhindert die Sperrklinke 30 ein ungewolltes Verschwenken des Armes 13 im Uhrzeigersinn und damit ein ungewolltes Lösen des Kuppelzapfens 4. Die Sperrklinke 30 bildet daher mit der Rastvertieffing 21 eine weitere Ver- und Entriegelungseinheit 31 zur Verriegelung des Kuppelzapfens 4 in der Kuppelstellung. Hierdurch wird die verriegelnde Wirkung des Querschenkels 17 der Kulisse 12 auf den Kuppelzapfen 4 unterstützt.

Um beim Eintritt einer Kuppelöse 32 ein selbsttätiges Verschieben des Kuppelzapfens 4 in die in Figur 3 dargestellte Kuppelstellung zu ermöglichen, steht die Ver- und Entriegelungseinheit 29 mit einer in das Kupplungsmaul 3 ragenden Tastzunge 33 in Wirkverbindung. Die Tastzunge 33 ist um die Achse 24 der Ver- und Entriegelungseinheit 29 schwenkbar gehalten. Sie läßt sich relativ zum Schwenkarm 23 verschwenken. In der in Figur 1 dargestellten unbelasteten Lage der Tastzunge 33 stößt diese gegen eine Anschlagfläche 34 des Kupplungskopfes 2. Die Tastzunge 33 wird von einer Feder 35 in diese unbelastete Lage gedrückt. Ein Ende 36 der Feder 35 ist in einer Sackbohrung 37 des Kupplungskopfes 2 festgelegt. Das andere Ende 38 der Feder 35 ist an einem Dorn 39 der Tastzunge 33 festgelegt.

In der Tastzunge 33 ist eine im wesentlichen parallel zu ihrer Längserstreckung gerichtete Bohrung 40 vorgesehen. Diese Bohrung 40 steht im wesentlichen senkrecht zur Achse 24. Sie dient als lineare Führung einer Rastnase 41, deren freies Ende 42 mit der Ver- und Entriegelungseinheit 29 in Wirkverbindung steht. Die Ver- und Entriegelungseinheit 29 besitzt eine radiale Nut 43, die über einen beschränkten Winkelbereich vorgesehen ist. Eine Stirnwand 44 der Nut 43 ist gerundet ausgebildet. Es bildet für das freie Ende 42 der Rastnase 41 einen Mitnehmerteil 45. Das freie Ende 42 der Rastnase 41 ist kegelförmig und paßgerecht zum Mitnehmerteil 45 ausgebildet. Die Rastnase 41 weist einen zylindrischen Abschnitt 46 auf, so daß er im wesentlichen die Form eines Bolzens besitzt. Im zylindrischen Abschnitt 46 des Rastnases 41 ist eine Vertiefung 47 vorgesehen, die einer Öffnung 48 der Tastzunge 33 gegenüberliegt. Die Öffnung 48 wird von einer Querbohrung der Tastzunge 33 gebildet. An der Anschlagfläche 34 für die Tastzunge 33 befindet sich ein Vorsprung 49, der von einer Madenschraube gebildet ist. Dieser Vorsprung 49 oder Madenschraube weist an ihrem vorstehenden Ende beispielsweise ein Paßstück 47a auf, mit dem es in die Vertiefung 47 zum Arretieren eingreift. Zur Festlegung dieser Madenschraube ist im Kupplungskopf 2 eine mit Gewinde ausgestattete Aussparung 50 vorgesehen. In der in Figur 1 dargestellten unbelasteten Lage der Tastzunge 33 greift der Vorsprung 49 durch die Öffnung 48 der Tastzunge 33 in die Vertiefung 47 der Rastnase 41 ein. Auf diese Weise wird die Rastnase 41 gegenüber Verschiebungen in Richtung der Längserstrekkung der Tastzunge 33 arretiert. Wird die Tastzunge 33 entgegen dem Uhrzeigersinn verschwenkt, so wird ab einem bestimmten Grenzwinkel α der Eingriff des Vorsprungs 49 in die Vertiefung 47 der Rastnase 41 aufgehoben und die Rastnase 41 in Richtung der Längserstreckung der Tastzunge 33 verschiebbar. Die Rastnase 41 wird in diesem Fall unter dem Einfluß einer Feder 52 leicht gegen die radiale Nut 43 der Ver- und Entriegelungseinheit 29 gedrückt.

Zum Schutz der Verstell- und der Ver- und Entriegelungseinheiten 11, 29 31 vor Verschmutzung und Beschädigung ist der Kupplungskopf 2 im oberen Bereich als Gehäuse 55 ausgebildet. Es besteht aus Wänden 56, 57, 58 und einem Deckel 59. In der vorderen Wand 56 ist eine Längsnut 59 zur Führung des Armes 13 vorgesehen. In der hinteren Wand 57 ist die Feder 15 des Armes 13 eingespannt. In den Seitenwänden 58 sind die Achsen 14 und 24 des Armes 13 sowie der Verstelleinheit 11 gelagert. Eine Erhebung 60 im Deckel 59 ermöglicht die Erzielung eines großen Verstellwinkels des Armes 13 bei Einhaltung geringster Abmessungen des Gehäuses 55. Eine Bohrung 61 in der Wand 57 erleichtert das Einführen der Madenschraube 49 in die Aussparung 50. Der Kupplungskopf besitzt an seinem, dem Kupplungsmaul gegenüberliegenden Ende 62 einen Schaft 63, der in bekannter Weise an einem nicht dargestellten Fahrzeug festgelegt wird.

Bei der in Figur 1 dargestellten Lösestellung des Kuppelzapfens 4 ist dieser aus dem Kupplungsmaul 3 zurückgezogen. Der Kuppelzapfen 4 wird vom Arm 13 in Lage gehalten, der sich wiederum an der Rolle 27 des Schwenkarmes 23 abstützt. Die Rolle 27 dringt in die Rastvertiefung 22 des Armes 13 ein und verriegelt hierdurch den Arm 13 in der dargestellten Lage. Die Tastzunge 33 wird durch die Wirkung der Feder 35 in die dargestellte unbelastete Lage gedrückt. Die in der Bohrung 40 normalerweise verschiebbar gehaltene Rastnase 41 der Tastzunge 33 dringt in die radiale Nut 43 der Ver- und Entriegelungseinheit 29 ein und berührt dessen Mitnehmerteil 45. Der in die Vertiefung 47 der Rastnase 41 eindringende Vorsprung 49 arretiert die Rastnase 41 gegenüber Verschiebungen in Richtung der Längserstreckung der Tastzunge 33.

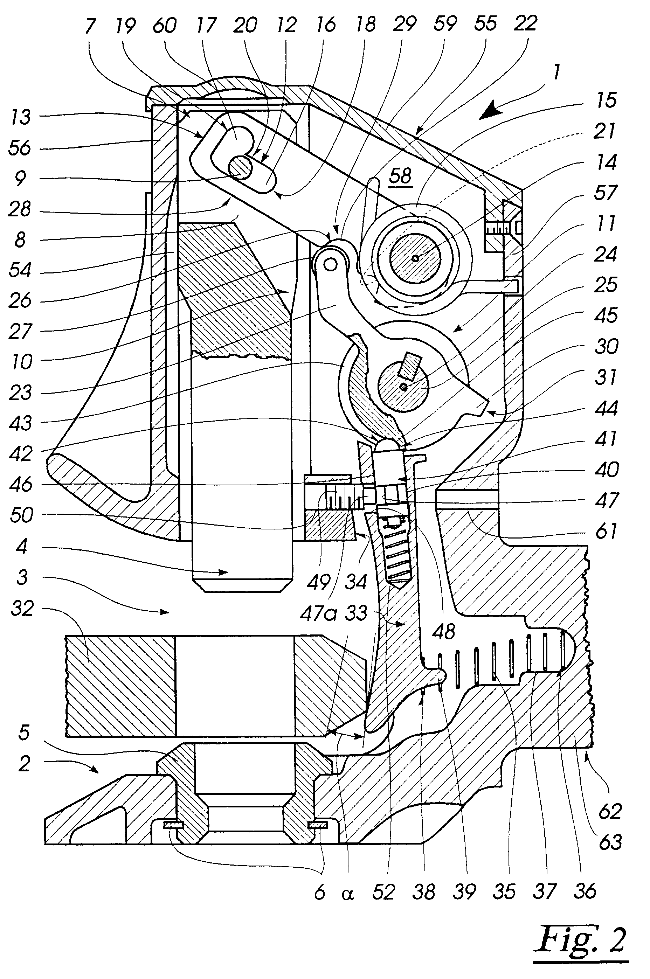

Dringt, wie in Figur 2 dargestellt, eine Kuppelöse 32 in das Kupplungsmaul 3 ein, so verschwenkt diese die Tastzunge 33 entgegen dem Uhrzeigersinn. Da die Rastnase 41 durch den Vorsprung 49 arretiert ist, erfaßt sie den Mitnehmerteil 45 der Ver- und Entriegelungseinheit 29. Ein von der Kuppelöse 32 auf die Tastzunge 33 wirkendes Drehmoment wird daher auf die Ver- und Entriegelungseinheit 29 übertragen. Der Schwenkarm 23 der Ver- und Entriegelungseinheit 29 wird von diesem Drehmoment entgegen dem Uhrzeigersinn verschwenkt, bis er die in Figur 2 dargestellte Totpunktlage überschreitet. Die Verriegelung des Armes 13 durch den Schwenkarm 23 ist dann aufgehoben, so daß der Arm 13 unter der Wirkung der Feder 15 entgegen dem Uhrzeigersinn verschwenkt wird. Infolge der Ankopplung des Kuppelzapfens 4 an den Arm 13 wird der Kuppelzapfen 4 nach unten verschoben.

Der Kuppelzapfen 4 erreicht schließlich die in Figur 3 dargestellte Kuppelstellung, in der er das Kupplungsmaul 3 durchsetzt. Gleichzeitig wird der Schwenkarm 23 durch den im Uhrzeigersinn verschwenkten Arm 13 in die in Figur 3 dargestellte Lage gebracht. Zusätzlich könnte an der Welle 25 der Verstelleinheit 11 eine Feder vorgesehen sein, die den Schwenkarm 23 entgegen dem Uhrzeigersinn vorspannt. Um den Kuppelzapfen 4 wieder in die Lösestellung zu bringen, wird die Welle 25 der Verstelleinheit 11 im Uhrzeigersinn verschwenkt. Die Rolle 27 der Verstelleinheit 11 drückt dabei gegen die Unterkante 28 des Armes 13. Hierdurch wird der Arm 13 im Uhrzeigersinn verschwenkt und der Kuppelzapfen 4 angehoben.

Erreicht der Kuppelzapfen 4 die in Figur 4 dargestellte Lösestellung, so kann es insbesondere bei in Talrichtung stehenden Fahrzeugen vorkommen, daß die Kuppelöse 32 gegen die Tastzunge 33 drückt. Die Tastzunge 33 wird daher, wie in Figur 4 dargestellt, im Uhrzeigersinn verschwenkt. Damit diese Verschwenkung der Tastzunge 33 nicht zu einer Lösung der Ver- und Entriegelungseinheit 29 führt, ist der Vorsprung 49 so lang ausgebildet, daß er in diesem Fall die Rastnase 41 der Tastzunge 33 freigibt. Die Rastnase 33 ist daher in Richtung der Längserstreckung der Tastzunge 33 verschiebbar. Beim Erfassen des Mitnehmerteils 45 der Ver- und Entriegelungseinheit 29 wird die Rastnase 41 von der Achse 24 weggedrückt, wobei die Feder 52 gespannt wird. Die Rastnase 41 kann daher das von der Kuppelöse 32 auf die Tastzunge 33 ausgeübte Drehmoment nicht mehr auf die Ver- und Entriegelungseinheit 29 übertragen, so daß sie in der in Figur 4 dargestellten Verriegelungsstellung verbleibt. Der Kuppelzapfen 4 bleibt daher in der Lösestellung verriegelt. Die Kuppelöse 32 kann einfach aus dem Kupplungsmaul 3 entnommen werden. Diese Arbeit kann von einer einzigen Bedienungsperson durchgeführt werden, da ein Festhalten der Verstelleinheit 11 in der Lösestellung des Kuppelzapfens 4 entfallen kann. Nach dem Entfernen der Kuppelöse 32 aus dem Kupplungsmaul 3 wird die Tastzunge 33 unter der Wirkung der Feder 35 in Richtung des Uhrzeigersinns verschwenkt. Dabei erreicht die Rastnase 41 die radiale Nut 43 des Verstelleinheits 11. Unter der Kraftwirkung der Feder 52 wird die Rastnase 41 in die Nut 43 gedrückt. Unterschreitet die Tastzunge 33 den in Figur 1 dargestellten Grenzwinkel α, so wird die Rastnase 41 wiederum durch den Vorsprung 49 arretiert. Bei einem erneuten Einführen der Kuppelöse 32 in das Kupplungsmaul 3 wird daher entsprechend den Figuren 1 und 2 die Ver- und Entriegelungseinheit 29 entriegelt und der Kuppelzapfen 4 in die Kuppelstellung verschoben.

### Bezugszeichenliste

- 1: Anhängerkupplung
- 2: Kupplungskopf
- 3: Kupplungsmaul
- 4: Kupplungszapfen
- 5: Ringteil
- 6: Sicherungsring
- 7: oberes Ende
- 8: Längsnut
- 9: Querbolzen
- 10: hinteres Ende
- 11: Verstelleinheit
- 12: Kulisse
- 13: Arm
- 14: Achse
- 15: Feder
- 16: Längsschenkel
- 17: Querschenkel
- 18,19: freies Ende
- 20: Übergang
- 21,22: Rastvertiefung
- 23: Schwenkarm
- 24: Achse
- 25: Welle
- 26: freies Ende
- 27: Rolle
- 28: Unterkante
- 29: Ver- und Entriegelungseinheit
- 30: Sperrklinke
- 31: Ver- und Entriegelungseinheit
- 32: Kuppelöse
- 33: Tastzunge
- 34: Anschlagfläche
- 35: Feder
- 36: Ende
- 37: Sackbohrung
- 38: Ende
- 39: Dorn
- 40: Bohrung
- 41: Rastnase
- 42: freies Ende
- 43: radiale Nut
- 44: Stirnwand
- 45: Mitnehmer
- 46: zylindrischer Abschnitt
- 47: Vertiefung
- 47a: Paßstück
- 48: Öffnung
- 49: Vorsprung
- 50: Aussparung
- 51: Bohrung
- 52: Feder
- 55: Gehäuse
- 56,57,58: Wand
- 59: Deckel
- 60: Erhebung
- 61: Bohrung
- 62: Ende des Kupplungskopfes
- 63: Schaft
- α: Grenzwinkel

## Patentansprüche

1. Anhängerkupplung für ein Fahrzeug mit einem Kupplungskopf (2), in dem ein Kuppelzapfen (4) zwischen einer ein Kupplungsmaul (3) durchsetzenden Kuppelstellung und einer zurückgezogenen Lösestellung verschiebbar geführt ist und mit einer Verund Entriegelungseinheit (29), die im wesentlichen von einem Schwenkarm (23) gebildet ist, der mit einer in das Kupplungsmaul (3) greifenden, federnd abgestützten Tastzunge (33) auf einer gemeinsamen Achse (24) schwenkbar gehalten ist, wobei der Schwenkarm (23) an seiner die Achse (24) erfassenden Anlenkung einen Mitnehmerteil (45) aufweist, auf den eine Rastnase (41) der Tastzunge (33) beim Verschwenken zum Entriegeln des Kuppelzapfens (4) einwirkt, wobei die Rastnase (41) ein relativ zur Tastzunge (33) bewegbarer und in Abhängigkeit von der Winkellage der Tastzunge (33) arretierbarer Teil ist, dadurch gekennzeichnet, daß zur Arretierung in die Rastnase (41) ein ortsfester Vorsprung (49) des Kupplungsmauls (3) ragt, oder daß die Rastnase (41) einen Vorsprung aufweist, der in eine Aussparung des Kupplungsmauls (3) greift.

2. Anhängerkupplung nach Anspruch 1, dadurch gekennzeichnet, daß die Rastnase (41) ein federnd gehaltener Bolzen ist.

3. Anhängerkupplung nach Anspruch 1 oder 2, dadurch gekennzeichnet, daß die bewegbare Rastnase (41) in Längsrichtung zur Tastzunge (33) verschiebbar ist.

4. Anhängerkupplung nach mindestens einem der Anspruch 1 bis 3, dadurch gekennzeichnet, daß die als Bolzen ausgebildete Rastnase (41) in einer Längsbohrung (40) der Tastzunge (33) linear geführt ist.

5. Anhängerkupplung nach mindestens einem der Ansprüche 1 bis 4, dadurch gekennzeichnet, daß die als Bolzen ausgeführte Rastnase (41) in ihrem Körper eine Vertiefung (47) aufweist, in die zur Arretierung der Vorsprung (49) des Kupplungsmauls (3) ragt.

6. Anhängerkupplung nach mindestens einem der Ansprüche 1-5, dadurch gekennzeichnet, daß der Vorsprung (49) ein in einer Aussparung (50) des Kupplungsmauls (3) gehaltener Stift oder eine verstellbare Madenschraube ist.

7. Anhängerkupplung nach mindestens einem der Ansprüche 1 bis 5, dadurch gekennzeichnet, daß die Rastnase (41) an ihrem am Mitnehmerteil (45) anliegenden freien Ende (42) gerundet ausgebildet ist.

8. Anhängerkupplung nach mindestens einem der Ansprüche 1 bis 5 und 7, dadurch gekennzeichnet, daß die am Mitnehmerteil (45) zur Anlage kommende Fläche der Rastnase (41) paßgerecht zum Mitnehmerteil (45) ausgebildet ist.

9. Anhängerkupplung nach mindestens einem der Ansprüche 1, 7 und 8, dadurch gekennzeichnet, daß der Mitnehmerteil (45) eine Stirnwandung (44) einer über einen Winkelbereich der Anlenkung des Schwenkarmes (23) vorgesehenen radialen Nut (43) ist.

## Claims

1. Trailer coupling for a vehicle, with a coupling head (2), in which a coupling pin (4) is guided displaceably between a coupling position passing through a coupling jaw (3) and a retracted release position, and with a locking and unlocking unit (29) formed essentially by a pivoting arm (23) which is held pivotably on a common axis (24) by means of a resiliently supported tracer tongue (33) reaching into the coupling jaw (3), the pivoting arm (23) having, at its articulation encompassing the axis (24), a driver part (45), on which a catch nose (41) of the tracer tongue (33) acts during pivoting for the purpose of unlocking the coupling pin (4), the catch nose (41) being a part which is moveable relative to the tracer tongue (33) and is detainable as a function of the angular position of the tracer tongue (33), characterized in that, for detention, a fixed projection (49) of the coupling jaw (3) projects into the catch nose (41), or in that the catch nose (41) has a projection which engages into a recess of the coupling jaw (3).

2. Trailer coupling according to Claim 1, characterized in that the catch nose (41) is a resiliently held bolt.

3. Trailer coupling according to Claim 1 or 2, characterized in that the moveable catch nose (41) is displaceable in the longitudinal direction relative to the tracer tongue (33).

4. Trailer coupling according to at least one of Claims 1 to 3, characterized in that the catch nose (41), designed as a bolt, is guided linearly in a longitudinal bore (40) of the tracer tongue (33).

5. Trailer coupling according to at least one of Claims 1 to 4, characterized in that the catch nose (41), designed as a bolt, has, in its body, a depression (47), into which the projection (49) of the coupling jaw (3) projects for the purpose of detention.

6. Trailer coupling according to at least one of Claims 1 to 5, characterized in that the projection (49) is a stud or adjustable grub screw held in a recess (50) of the coupling jaw (3).

7. Trailer coupling according to at least one of Claims 1 to 5, characterized in that the catch nose (41) is designed to be rounded at its free end (42) bearing on the driver part (45).

8. Trailer coupling according to at least one of Claims 1 to 5 and 7, characterized in that that face of the catch nose (41) which comes to bear on the driver part (45) is designed to match the driver part (45).

9. Trailer coupling according to at least one of Claims 1, 7 and 8, characterized in that the driver part (45) is an end wall (44) of a radial groove (43) provided over an angular sector of the articulation of the pivoting arm (23).

## Revendications

1. Attelage de remorque pour un véhicule, comportant une tête d'attelage (2) dans laquelle une broche d'attelage (4) est montée mobile entre une position d'attelage dans laquelle elle traverse une bouche d'attelage (3) et une position dégagée reculée, et un dispositif de verrouillage et déverrouillage (29) qui est formé essentiellement d'un bras basculant (23) qui est monté basculant, avec une languette palpeuse (33) s'engageant dans la bouche d'attelage (3) et supportée élastiquement, sur un axe commun (24), le bras basculant (23) présentant à son articulation qui saisit l'axe (24) un élément d'entraînement (45) sur lequel un doigt d'encliquetage (41) de la languette palpeuse (33) agit lors du basculement pour le déverrouillage de la broche d'attelage (4), le doigt d'encliquetage (41) étant un élément mobile par rapport à la languette palpeuse (33) et arrêtable en fonction de la position angulaire de celle-ci, caractérisé par le fait que pour l'arrêt, dans le doigt d'encliquetage (41) s'engage une saillie fixe (49) de la bouche d'attelage (3), ou que le doigt d'encliquetage (41) présente une saillie qui s'engage dans un évidement de la bouche d'attelage (3).

2. Attelage de remorque selon la revendication 1, caractérisé par le fait que le doigt d'encliquetage (41) est une tige tenue élastiquement.

3. Attelage de remorque selon l'une des revendications 1 et 2, caractérisé par le fait que le doigt mobile d'encliquetage (41) est mobile dans la direction longitudinale de la languette palpeuse (33).

4. Attelage de remorque selon au moins une des revendications 1 à 3, caractérisé par le fait que le doigt d'encliquetage (41) constitué d'une tige est guidé de manière rectiligne dans un trou longitudinal (40) de la languette palpeuse (33).

5. Attelage de remorque selon au moins une des revendications 1 à 4, caractérisé par le fait que le doigt d'encliquetage (41) réalisé sous forme de tige présente dans son corps un creux (47) dans lequel entre pour l'arrêt la saillie (49) de la bouche d'attelage (3).

6. Attelage de remorque selon au moins une des revendications 1 à 5, caractérisé par le fait que la saillie (49) est une goupille montée dans un évidement (50) de la bouche d'attelage (3) ou un goujon fileté réglable.

7. Attelage de remorque selon au moins une des revendications 1 à 5, caractérisé par le fait que le doigt d'encliquetage (41) est arrondi à son extrémité libre (42) appuyée sur l'élément d'entraînement (45).

8. Attelage de remorque selon au moins une des revendications 1 à 5 et 7, caractérisé par le fait que la surface du doigt d'encliquetage (41) qui vient s'appuyer sur l'élément d'entraînement (45) est ajustée à ce dernier.

9. Attelage de remorque selon au moins une des revendications 1, 7 et 8, caractérisé par le fait que l'élément d'entraînement (45) est une paroi frontale (44) d'une rainure radiale (43) prévue sur un domaine angulaire de l'articulation du bras basculant (23).
